# EUROPÄISCHE PATENTANMELDUNG

(11) **EP 1 058 124 A2**
(43) Veröffentlichungstag der Anmeldung: **06.12.2000**
(21) Anmeldenummer: 00107512.6
(22) Anmeldetag: 07.04.2000
(51) Int. Cl.: G01S 3/28

(54) **Verfahren und Vorrichtung zur Bestimmung einer Einfallsrichtung von elektromagnetischen Wellen**

(30) Priorität: 05.06.1999 DE 19925760
(71) Anmelder: Hagenuk KMT Kabelmesstechnik GmbH, 01471 Radeburg (DE)
(72) Erfinder: Fraedrich, Volker, 01762 Schmiedeberg (DE)
(74) Vertreter: Hansmann, Dierk, Dipl.-Ing.

(57) **Zusammenfassung**

Es werden ein Verfahren zur Bestimmung einer Einfallsrichtung von elektromagnetischen Wellen beschrieben, das sich durch folgende Schritte auszeichnet: Empfangen eines ersten und eines zweiten Signals einer eine Antennenanordnung bildenden ersten bzw. zweiten Richtantenne, deren Richtcharakteristik im wesentlichen senkrecht zueinander angeordnet sind; Invertieren eines der Antennen-Ausgangssignale; Multiplizieren des invertierten Antennensignals mit dem nichtinvertierten Antennensignal; Auswerten des Produktssignals im Hinblick auf ein Signalmaximum in Abhängigkeit von einer Bewegung der Antennenanordnung sowie Erzeugen einer gewünschten Signalisierung beim Auftreten eines relativen Signalmaximums. Ferner wird eine Vorrichtung zur Durchführung des Verfahrens und eine besonders vorteilhafte Anwendung in einem Ortungsgerät für metallische Leitungen beschrieben.

## Beschreibung

Die Erfindung betrifft ein Verfahren und eine Vorrichtung zur Bestimmung einer Einfallsrichtung von elektromagnetischen Wellen, das/die insbesondere zur Anwendung in einem Qrtungsgerät zur schnellen und genauen Bestimmung des Verlaufes von verdeckt verlegten metallischen Leitungen.

Verfahren bzw. Vorrichtungen dieser Art finden im weitesten Sinne auf dem Gebiet der Funkpeilung Anwendung. Die dafür verwendeten Systeme werden im allgemeinen in zwei Gruppen eingeteilt, nämlich Rundumpeilsysteme und Sektorpeilsysteme.

Die Rundumpeilsysteme, die zum Beispiel mit Doppler-, Adcock- und Kreuzrahmenpeilern arbeiten, haben den Vorteil, daß das Antennensystem fest installiert sein kann. Ein Nachteil diese Systeme besteht jedoch in den hohen Anforderungen, die hinsichtlich des mechanischen Aufbaus und des mechanischen und elektrischen Abgleichs zu erfüllen sind, Weiterhin besteht eine hohe Empfindlichkeit gegen Störwellen, die über Reflektoren in der Umgebung einfallen. Durch diesen Mehrwegeempfang können erhebliche Peilfehler verursacht werden.

Zu den Peilgeräten gehören bewegliche bzw. schwenkbare Sektorpeiler wie zum Beispiel Phasenmonopuls-, Interferometer- und Abtastpeiler, die im allgemeinen mit scharf bündelnden Richtantennen arbeiten, die mechanisch oder elektrisch geschwenkt werden. Die im Schwenkbereich auftretenden Änderungen der Antennensignale werden ausgewertet und zur Anzeige der Richtung, aus der die elektromagnetischen Wellen eintreffen, verwendet.

Peilsysteme dieser Art, mit denen auf Grund der Einfallsrichtung von elektromagnetischen Wellen der Ort ihrer Quelle ermittelt werden kann, werden nicht nur in der klassischen Navigation zur Bestimmung von Standort und Geschwindigkeit, sondern zum Beispiel auch für geodätische Vermessungsarbeiten mit Hilfe spezieller Funkbaken und für die Peilung des Verlaufes von Kabel- und Rohrleitungen, in denen Wechselstrom fließt, verwendet.

In der DE 4035441 wird ein Verfahren und eine Vorrichtung zur Bestimmung der Richtung einfallender Funksignale beschrieben. Dabei werden die Signale von zwei bis vier unterschiedlich ausgerichteten Richtantennen zeitversetzt periodisch gedämpft und einem gemeinsamen Empfänger zugeführt. Durch anschließende mathematische Verknüpfung wird schließlich ein Richtungswert ermittelt. Ein Nachteil hierbei besteht jedoch darin, daß eine uneingeschränkter Funktion nur in einem relativ schmalen Frequenzband gegeben ist, da die Frequenz der periodischen Dämpfung, mit der eine Bewertung der amplitudenmodulierten Funksignale vorgenommen wird, deutlich außerhalb des Bereiches der Modulationsfrequenz liegen muß.

In der DE 3309882 wird ein Verfahren und eine Einrichtung zur Ermittlung der Einfallsrichtung elektromagnetischer Wellen beschrieben. Dabei kann unter Verwendung von mindestens zwei Antennen ein Peilsignal gewonnen werden, indem die Antennensignale durch Phasenverzögerung, Umtastung und Vektorsummierung zusammengefaßt und dann synchron demoduliert werden. Ein Nachteil dieses Systems besteht jedoch in der Abhängigkeit des Abstandes der Antennen von der Wellenlänge des Signals des zu peilenden Funksenders. Insbesondere im Bereich niedriger Frequenzen kann somit eine Peilung nur durchgeführt werden, wenn der Abstand der Antennen entsprechend der relativ großen Wellenlänge ausreichend groß gemacht werden kann.

Mit Breitband-Peilempfängern, die zum Beispiel in der EP 0130638 beschrieben sind, läßt sich dieser Nachteil zwar weitgehend vermeiden, der apparative Aufwand zur Bewertung der Phase und der Amplitude der Antennensignale sowie die Anforderungen an die Qualifikation des Bedienpersonals für die Bewertung der Peilsignale sind jedoch vergleichsweise hoch.

Schließlich ist in der EP 0247370 ein Verfahren und eine Vorrichtung zur Bestimmung der Richtung eines von einer Signalquelle empfangenen Signals mit drei Antennen beschrieben. Auch dieses System hat verschiedene Nachteile, die im wesentlichen in der Frequenzabhängigkeit und dem relativ hohen apparativen Aufwand für den Empfänger bestehen. Ferner besteht die Gefahr, daß beim Vorhandensein mehrerer Signalquellen in unterschiedlichen Richtungen die Peilanzeige nicht mehr zuverlässig ist.

Alle vorgenannten Verfahren und Vorrichtungen haben somit den Nachteil, daß hohe Anforderungen hinsichtlich des mechanischen Aufbaus der Antennenanlage bestehen und die Eindeutigkeit der Ergebnisse weitgehend von dem Abstand und der Orientierung der Einzelantennen abhängig ist. Weiterhin sind die Meßergebnisse überwiegend abhängig von der Sendefrequenz der Funksignale, was durch die phasen- und frequenzabhängige Bewertung der Signale im Empfänger bedingt ist. Diese Nachteile können nur durch einen großen Aufwand für die Antennen und die Empfangseinrichtungen, einen hohen Zeitaufwand für die Messung und die Bewertung und / oder einen vergleichsweise hohen Anspruch an die Qualifikation des Bedienpersonals ausgeglichen werden. Dieser Aufwand ist jedoch insbesondere für eine Anwendung in einem Leitungsortungsgerät nicht realistisch, da ein solches Gerät klein, leicht und einfach zu bedienen sein muß.

Der Erfindung liegt deshalb die Aufgabe zugrunde, ein Verfahren zu schaffen, mit dem eine Einfallsrichtung von elektromagnetischen Wellen mit relativ geringem apparativen Aufwand zuverlässig bestimmt werden kann. Ferner soll eine Vorrichtung geschaffen werden, die mit relativ einfachen elektrischen Schaltungseinheiten zur Durchführung des Verfahrens realisierbar ist und sich insbesondere zur Anwendung als Leitungsortungsgerät eignet.

Gelöst wird diese Aufgabe dadurch, daß mit einem Verfahren der eingangs genannten Art, das folgende Schritte aufweist:
- Empfangen eines ersten und eines zweiten Signals einer eine Antennenanordnung bildenden ersten bzw. zweiten Richtantenne, deren Richtcharakteristik im wesentlichen senkrecht zueinander angeordnet sind;
- Invertieren eines der Richtantennen-Ausgangssignale; multiplizieren des invertierten Richtantennensignals mit dem nichtinvertierten Richtantennen-Ausgangssignal;
- Auswerten des Produktssignals im Hinblick auf ein Signalmaximum in Abhängigkeit von einer Bewegung der Antennenanordnung sowie Erzeugen einer gewünschten Signalisierung beim Auftreten eines relativen Signalmaximums.

Die Aufgabe wird ferner dadurch gelöst, daß mindestens eine erste und eine zweite, eine Antennenanordnung bildende Richtantenne, deren Richtcharakteristik im wesentlichen senkrecht zueinander angeordnet sind, einen Inverter zum Invertieren des Ausgangssignals der zweiten Richtantenne, einen Multiplizierer zum Multiplizieren des invertierten Ausgangssignals der zweiten Richtantenne mit dem nichtinvertierten Ausgangsignal der ersten Richtantenne, sowie eine Auswerteeinrichtung, der das Produktsignal zugeführt wird, zur Erzeugung einer Signalisierung, wenn ein relatives Signalmaximum auftritt.

Vorteile dieser Lösungen bestehen darin, daß der Aufwand für die mechanische Montage und den elektrischen Abgleich der Antennen gering ist, und daß die Meßergebnisse weitgehend unabhängig von der Frequenz und der Modulation der Quelle der elektromagnetischen Wellen sind, da nur eine Bewertung von Feldstärkemessungen vorgenommen wird.

Da eine stetige Bewertung des empfangenen Signals im gesamten Signalstärkebereich möglich ist, kann auch ein Vorhandensein von mehreren, sich überlagernden Quellen festgestellt werden.

Die Bewertung der Meßergebnisse kann auch durch nicht speziell ausgebildetes Personal vorgenommen werden, da bei Erreichen einer entsprechenden Antennenausrichtung ein eindeutiges Signalmaximum erzeugt und angezeigt wird.

Die Unteransprüche haben vorteilhafte Weiterbildungen der Erfindung zum Inhalt. Eine besonders bevorzugte Anwendung ergibt sich dabei für ein Leitungsortungsgerät dadurch, daß durch die Anordnung von mindestens zwei Vorrichtungen in einem definierten Abstand in einem Empfänger, die eine Bewertung der Empfangssignalstärke beider Vorrichtungen mit einer Bestimmung des Abstandes der Signalquelle zum Empfänger für eine Bestimmung der Verlegetiefe eines elektrischen Kabels vornimmt.

Weitere Einzelheiten, Merkmale und Vorteile der Erfindung ergeben sich aus der folgenden Beschreibung von bevorzugten Ausführungsformen anhand der Zeichnung. Es zeigen:
- Fig. 1: ein schematisches Blockschaltbild einer ersten Ausführungsform der Erfindung;
- Fig. 2: ein schematisches Blockschaltbild einer zweiten Ausführungsform der Erfindung;
- Fig. 3: ein schematisches Blockschaltbild einer dritten Ausführungsform der Erfindung;
- Fig. 4: einen schematischen Verlauf des Antennensignals einer ersten Richtantenne;
- Fig. 5: einen schematischen Verlauf des Antennensignals einer zweiten Richtantenne; und
- Fig. 6: eine schematischen Verlauf eines Ausgangssignals.

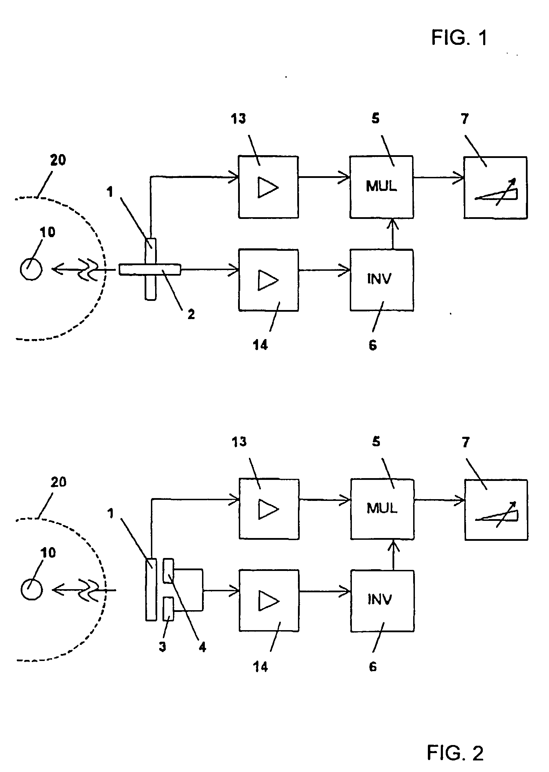

Die erste Ausführungsform gemäß Figur 1 umfaßt eine Antennenanordnung, die sich aus einer ersten und einer zweite Richtantenne zusammensetzt, die so montiert sind, daß ihre Achsen im wesentlichen senkrecht zueinander stehen. Die Antennenanordnung befindet sich gemäß Figur 1 im Abstand einer Quelle 10, von der elektromagnetische Wellen 20 ausgehen, deren Einfallsrichtung zu bestimmen ist. Im dargestellten Fall sind die Richtantennen jeweils Stabantennen, die so ausgerichtet wurden, daß die erste Stabantenne 1 parallel zum Verlauf der Feldlinien und die zweite Stabantenne 2 senkrecht zum Verlauf der Feldlinien liegt.

Die Ausgangssignale der ersten und zweiten Stabantenne 1, 2 werden jeweils über eine zugeordnete erste bzw. zweite Eingangsstufe 13, 14 geführt, bei denen es sich im einfachsten Fall um jeweils einen Verstärker handeln kann. Insbesondere in dem Fall, in dem die elektromagnetischen Wellen, relativ kurz oder schwach sind, können die Eingangsstufen jeweils einen auf die entsprechende Empfangsfrequenz abstimmbaren HF-Empfänger sowie einen Oszillator und Mischer zum Herabsetzen der Empfangsfequenz aufweisen.

Der Ausgang der ersten Eingangsstufe 13 ist mit einem ersten Eingang eines Multiplizierers 5 verbunden. Der Ausgang der zweiten Eingangsstufe 14 wird über einen Invertierer 6 geführt, dessen Ausgang an einem zweiten Eingang des Multiplizierers 5 anliegt. Mit dem Multiplizierer 5 wird somit das Ausgangssignal der ersten Stabantenne 1 mit dem invertierten Ausgangssignal der zweiten Stabantenne 2 multipliziert. Das sich ergebende Produktsignal wird einer Auswerteeinrichtung 7 zugeführt.

Die zweite Ausführungsform gemäß Figur 2 unterscheidet sich von der ersten Ausführungsform nur darin, daß anstelle der zweiten Stabantenne 2 eine Antennengruppe aus mindestens zwei Einzel-Stabantennen 3, 4 vorgesehen ist, die jeweils elektrisch gegenphasig verschaltet sind, so daß sich eine ähnliche Richtcharakteristik wie für die zweite Stabantenne 2 ergibt. Die Antennengruppe ist parallel zu der ersten Stabantenne 1 angeordnet. Die übrigen Komponenten sind identisch und sollen nicht noch einmal beschrieben werden.

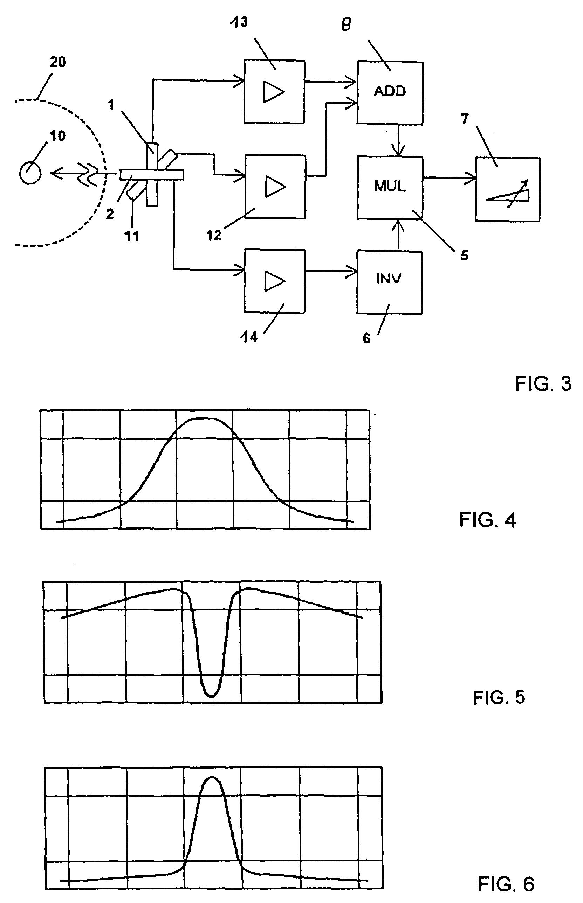

Figur 3 zeigt schließlich eine dritte Ausführungsform der Erfindung, bei der gegenüber der ersten und zweiten Ausführungsform eine dritte Stabantenne 11 vorgesehen ist, deren Achse relativ zu den Achsen der ersten und zweiten Stabantenne 1, 2 orthogonal ausgerichtet ist. Das Ausgangssignal der dritten Stabantenne 11 wird über eine dritte Eingangsstufe 12 geführt, die im wesentlichen identisch mit der ersten und zweiten Eingangsstufe 13, 14 ist.

Weiterhin ist ein Addierer 8 vorgesehen, dessen Eingänge mit den Ausgängen der ersten und dritten Eingangsstufe 13, 12 verbunden sind. Der Ausgang dieses Addierers liegt an dem ersten Eingang des Multiplizierers 5 an, während dem zweiten Eingang des Multiplizierers 5 wiederum das über den Invertierer 6 geführte Signal der zweiten Stabantenne 2 zugeführt wird. Der Ausgang des Multiplizierers 5 liegt schließlich an der Auswerteeinrichtung 7 an.

Figur 4 zeigt den Verlauf des Ausgangssignals der ersten Stabantenne 1, wenn diese in seitlicher Richtung bewegt wird, während in Figur 5 dieser Verlauf für die zweite Stabantenne 2 bzw. die Antennengruppe 3, 4 dargestellt ist. Wie aus einem Vergleich der beiden Figuren deutlich wird, ist das Signalmaximum der ersten Stabantenne 1 relativ breit. Im Gegensatz dazu ergibt sich bei einer seitlichen Bewegung der zweiten Stabantenne 2 bzw. der Antennengruppe 3, 4 ein relativ scharfes Signalminimum. Das gemäß obiger Erläuterung erzeugte Produktsignal ist in Figur 6 gezeigt. Es stellt das Peilsignal dar, dessen Signalmaximum sich dann ergibt, wenn die Antennenanordnung wie in den Figuren 1 bis 3 dargestellt, gegenüber der Quelle 10 ausgerichtet ist.

Die dritte Ausführungsform gemäß Figur 3 hat bei der Anwendung den Vorteil, daß die Ausbildung des Maximums des Peilsignals nur von der parallelen Orientierung der Ebene, in der die erste und dritte Stabantenne 1, 11 liegt, relativ zu dem Verlauf der Feldlinien 20 (elektromagnetische Wellenfronten) der Quelle 10, nicht jedoch von der Orientierung der einzelnen Achsen dieser Antennen abhängig ist. Diese Ausführungsform ist somit besonders vorteilhaft bei der Peilung von geometrisch langgestreckten Quellen wie zum Beispiel Rohrleitungen oder Kabeln einzusetzen, durch die ein elektrischer Strom mit entsprechender Frequenz fließt.

Ein Leitungssuchgerät besteht darin, daß durch die Anordnung von mindestens zwei Vorrichtungen in einem definierten Abstand in einem Empfänger angeordnet sind. Durch eine Bewertung der Empfangssignalstärke beider Vorrichtungen wird eine Bestimmung des Abstandes der Signalquelle zum Empfänger vorgenommen, so daß hieraus die Verlegetiefe eines Kabels ermittelbar ist.

Für eine selektive Peilung von Funksendern können die Verstärker der ersten bis dritten Eingangsstufe 13, 14, 12 eine Kennlinie aufweisen, die einem bestimmten Amplitudengang zum Beispiel mit einer logarithmischen Kennlinie, oder einem Frequenzgang, zum Beispiel einem Bandpaß entspricht.

Schließlich besteht auch die Möglichkeit, bei störenden Reflexionen des Funksignals oder Feldverzerrungen die Signale von mindestens zwei erfindungsgemäßen Vorrichtungen miteinander zu verknüpfen, indem zum Beispiel mit einer Brückenschaltung eine Differenzbildung vorgenommen wird. Dadurch kann eine erhebliche Verbesserung des Peilsignals erzielt werden.

## Patentansprüche

1. Verfahren zur Bestimmung einer Einfallsrichtung von elektromagnetischen Wellen, gekennzeichnet durch folgende Verfahrensschritte:
- Empfangen eines ersten und eines zweiten Signals einer eine Antennenanordnung bildenden ersten bzw. zweiten Richtantenne, deren Achsen im wesentlichen senkrecht zueinander angeordnet sind;
- Invertieren eines der Richtantennen-Ausgangssignale; multiplizieren des invertierten Richtantennensignals mit dem nichtinvertierten Richtantennen-Ausgangssignal;
- Auswerten des Produktssignals im Hinblick auf ein Signalmaximum in Abhängigkeit von einer Bewegung der Antennenanordnung sowie Erzeugen einer gewünschten Signalisierung beim Auftreten eines relativen Signalmaximums.

2. Vorrichtung zur Bestimmung einer Einfallsrichtung von elektromagnetischen Wellen, gekennzeichnet durch mindestens eine erste und eine zweite, eine Antennenanordnung bildende Richtantenne (1, 2; 3, 4;), deren Achsen im wesentlichen senkrecht zueinander angeordnet sind, einen Inverter (6) zum Invertieren des Ausgangssignals der zweiten Richtantenne (2; 3, 4), einen Multiplizierer (5) zum Multiplizieren des invertierten Ausgangssignals der zweiten Richtantenne (2; 3, 4) mit dem nichtinvertierten Ausgangsignal der ersten Richtantenne (1), sowie eine Auswerteeinrichtung (7), der das Produktsignal zugeführt wird, zur Erzeugung einer Signalisierung, wenn ein relatives Signalmaximum auftritt.

3. Vorrichtung nach Anspruch 2, gekennzeichnet durch eine dritte Richtantenne (11), deren Achse im wesentlichen senkrecht zu der Achse der ersten und zweiten Richtantenne (1, 2; 3, 4) angeordnet ist, sowie einen Addierer (8) zum Addieren der Ausgangssignale der ersten und dritten Richtantenne (1, 11).

4. Vorrichtung nach Anspruch 2 oder 3, dadurch gekennzeichnet, daß mindestens eine der Richtantennen durch eine Antennengruppe realisiert ist.

5. Vorrichtung nach einem der Ansprüche 2 bis 4, gekennzeichnet durch eine jeder Richtantenne zugeordneten Eingangsstufe (13, 14, 12) zum Verstärken der Ausgangssignale der Richtantennen (1, 2; 3, 4; 11).

6. Vorrichtung nach Anspruch 5, dadurch gekennzeichnet, daß die Eingangsstufen (13, 14, 12) jeweils durch einen auf eine Frequenz einer elektromagnetischen Welle, deren Einfallsrichtung zu bestimmen ist, abstimmbaren HF-Empfänger mit Oszillator und Mischer zum Herabsetzen der Empfangsfrequenz realisiert sind.

7. Vorrichtung nach einem der Ansprüche 2 bis 6, dadurch gekennzeichnet, daß die Richtantennen Stabkernantennen sind.

8. Anwendung der Vorrichtung nach einem der Ansprüche 2 bis 7 in einem Ortungsgerät zur Bestimmung der Lage von metallischen Leitungen.

9. Vorrichtung nach einem der Ansprüche 1 bis 8, dadurch gekennzeichnet, daß durch die Anordnung von mindestens zwei Vorrichtungen in einem definierten Abstand in einem Empfänger, die eine Bewertung der Empfangssignalstärke beider Vorrichtungen mit einer Bestimmung des Abstandes der Signalquelle zum Empfänger für eine Bestimmung der Verlegetiefe eines elektrischen Kabels vornimmt.

10. Leitungssuchgerät mit einer Vorrichtung nach einem der Ansprüche 2 bis 9, dadurch gekennzeichnet, daß eine Meßeinrichtung zur Messung der Höhe eines Signalmaximums und eine Eicheinrichtung vorgesehen ist, mit der einem gemessenen Signalmaximum eine Verlegetiefe einer elektrischen Leitung in einer Wand zugeordnet und diese signalisierbar ist.
